# EUROPEAN PATENT APPLICATION

(11) **EP 2 506 202 A1**
(43) Date of publication of application: **03.10.2012**
(21) Application number: 11160258.7
(22) Date of filing: 29.03.2011
(51) Int. Cl.: G06Q 20/00, H04M 1/725, G06F 3/00

(54) **Mobile wireless communications device for selecting a payment account to use with a payment processing system based upon a microphone or device profile and associated methods**

(71) Applicant: Research In Motion Limited, Waterloo, ON N2L 3W8 (CA)
(72) Inventor: Adams, Neil Patrick, Waterloo Ontario N2L 3W8 (CA); Chin, Eugene, Mississauga Ontario L4W 0B5 (CA); Bukurak, David, Ottawa Ontario K2K 3K1 (CA)
(74) Representative: Noble, Nicholas

(57) **Abstract**

A mobile wireless communications device may include a near field communications (NFC) device, a microphone, a memory configured to store access information for each of a plurality of payment accounts, and a processor cooperating with the NFC device, the microphone, and the memory. The processor may be configured to capture a sound using the microphone, determine a given payment account from among the plurality thereof based upon the sound, and send the corresponding access information for the given payment account to a transaction terminal via the NFC device.

## Description

### Technical Field

The present disclosure relates to communications systems, and, more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1A is a schematic block diagram of a payment processing system in accordance with an example embodiment.

FIG. 1B is a flowchart of a method of operating the payment processing system of FIG. 1A.

FIG. 2A is a schematic block diagram of another payment processing system in accordance with an example embodiment.

FIG. 2B is a flowchart of a method of operating the payment processing system of FIG. 2A.

FIG. 3A is a schematic block diagram of a further payment processing system in accordance with an example embodiment.

FIG. 3B is a schematic block diagram of a further payment processing system in accordance with an alternative example embodiment.

FIG. 3C is a schematic block diagram of a further payment processing system in accordance with an additional example embodiment.

FIG. 3D is a flowchart of a method of operating the payment processing system of FIG. 3A.

FIG. 4A is a schematic block diagram of yet another payment processing system in accordance with an example embodiment.

FIG. 4B is a schematic block diagram of yet another payment processing system in accordance with an alternative example embodiment.

FIG. 4C is a schematic block diagram of yet another payment processing system in accordance with an additional example embodiment.

FIG. 4D is a flowchart of a method of operating the payment processing system of FIG. 4A.

FIG. 5A is a schematic block diagram of still a further payment processing system in accordance with an example embodiment.

FIG. 5B is a schematic block diagram of the further payment processing system in accordance with an alternative example embodiment.

FIG. 5C is a schematic block diagram of the further payment processing system in accordance with an additional example embodiment.

FIG. 5D is a flowchart of a method of operating the payment processing system of FIG. 5A.

FIG. 6A is a schematic block diagram of an additional payment processing system in accordance with an example embodiment.

FIG. 6B is a schematic block diagram of the additional payment processing system in accordance with an alternative example embodiment.

FIG. 6C is a schematic block diagram of the additional payment processing system in accordance with an additional example embodiment.

FIG. 6D is a flowchart of a method of operating the payment processing system of FIG. 6A.

FIG. 7 is a schematic block diagram illustrating example components of a mobile wireless communications device that may be used with the payment processing systems of FIGS. 1A, 2A, 3A, 3B, 3C, 4A, 4B, 4C, 5A, 5B, 5C, 6A, 6B, and 6C.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime and multiple prime notation is used to indicate similar elements in related embodiments.

Generally speaking, a mobile wireless communications device is provided herein which may include a near field communications (NFC) device, a microphone, a memory configured to store access information for each of a plurality of payment accounts, and a processor cooperating with the NFC device, the microphone, and the memory. The processor may be configured to capture a sound using the microphone, determine a given payment account from among the plurality thereof based upon the sound, and send the corresponding access information for the given payment account to a transaction terminal via the NFC device.

Each payment account may have a respective sound associated therewith, and the captured sound may comprise the sound associated with the given payment account. The memory may be configured to store a plurality of sounds, and each sound may be associated with a respective one of the plurality of payment accounts. The processor may be configured to determine the given payment account associated with the sound by matching the sound to one of the plurality of stored sounds. The mobile wireless communications device may further comprise an input device, and the processor may be further configured to capture a sound using the microphone and store the captured sound in the memory, and to associate a payment account with the stored sound based upon the input device.

The mobile wireless communications device may further comprise a position determining device, the processor may be configured to cooperate with the position determining device to determine a position of the mobile wireless communications device when in proximity to the transaction terminal, and the processor may be configured to also determine the given payment account based upon the geospatial location. The processor may be configured to determine at least one of a date or a time, and the processor may also be configured to also determine the given payment account based upon at least one of the date or the time.

A related method aspect may include storing access information for each of a plurality of payment accounts in a memory of a mobile wireless communications device, capturing a sound using a microphone of the mobile wireless communications device, and determining a given payment account from among the plurality thereof that is associated with the captured sound, using a processor of the mobile wireless communications device. The method may further include sending the corresponding access information for the given payment account to a transaction terminal via a NFC device of the mobile wireless communications device.

A related mobile wireless communications device may include a NFC device, a memory configured to store access information for each of a plurality of payment accounts, and a processor cooperating with the NFC device and the memory. The processor may be configured to operate the mobile wireless communications device according to a given device profile from among a plurality of different device profiles, determine a given payment account from among the plurality thereof based upon the given device profile, and send the corresponding access information for the given payment account to a transaction terminal via the NFC device.

Another related method aspect may include storing access information for each of a plurality of payment accounts in a memory of the mobile wireless communications device, operating the mobile wireless communications device according to a given profile from among a plurality of profiles using a processor of the mobile wireless communications device, and determining a given payment account from among the plurality thereof that is associated with the given profile using the processor of the mobile wireless communications device. The method may further include sending the corresponding access information for the given payment account to a transaction terminal via a NFC device of the mobile wireless communications device.

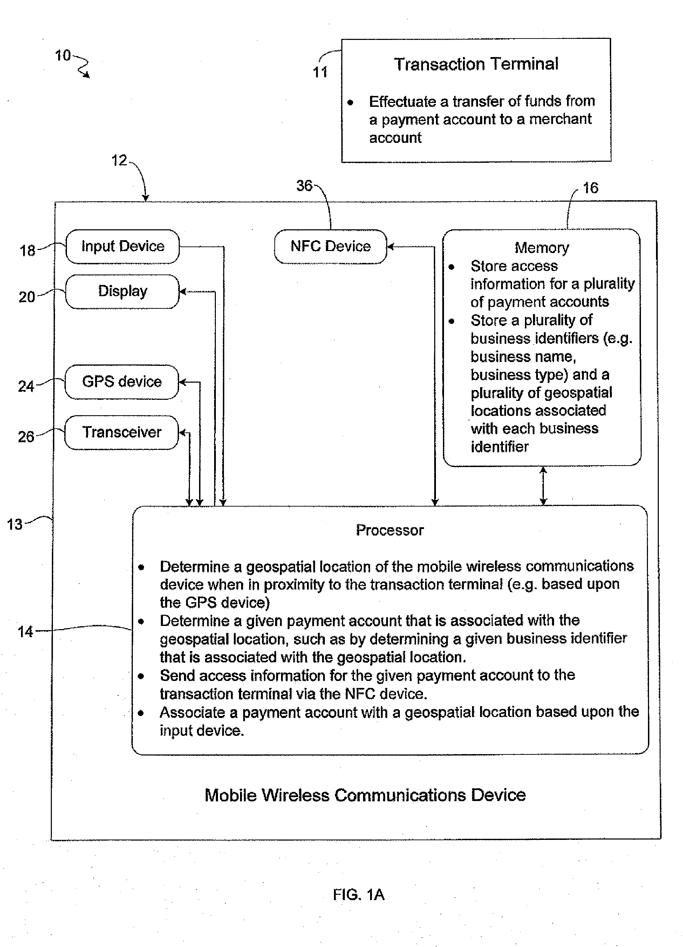

A variety of embodiments of the present disclosure will be discussed hereinbelow with reference to FIG. 1A, 2A, 3A-3C, 4A-4C, 5A-5C, and 6A-6C. It should be understood, though, that these embodiments are not mutually exclusive, and that the components and functionality of one embodiment may be combined with those of other embodiments.

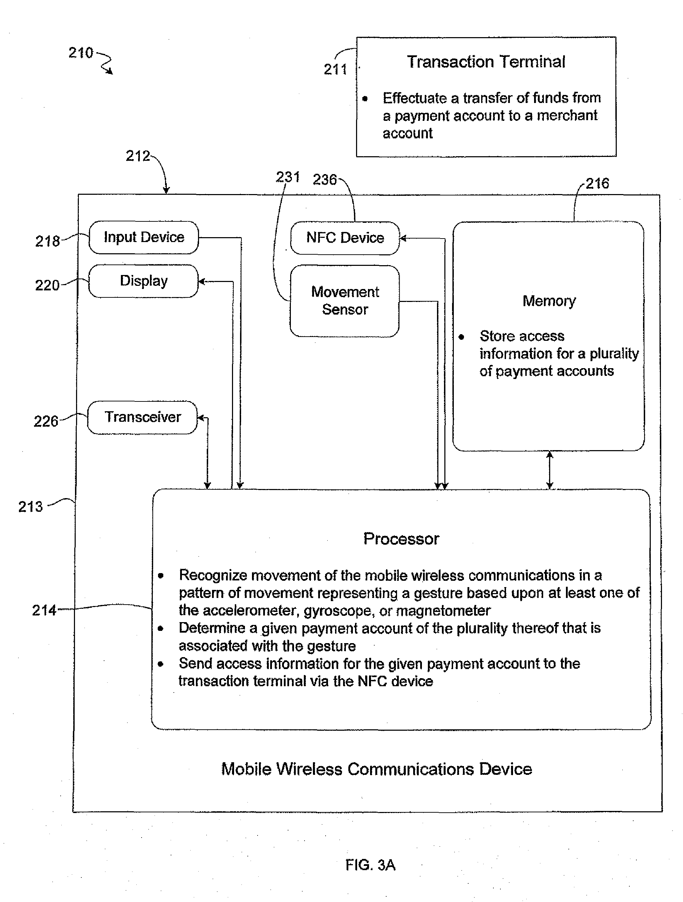

With initial reference to FIG. 3A, an example embodiment of a payment processing system 210 is now described. The payment processing system 210 includes a transaction terminal 211, such as a point-of-sale (POS) terminal, for example. The transaction terminal 211 is configured to effectuate a transfer of funds from a payment account, such as a checking account, savings account, gift card, debit card, payment service (e.g., PayPal), or a credit card, to a merchant account. This transfer may be effectuated according to a variety of suitable methods which require no further discussion herein.

The payment processing system 210 also includes a mobile wireless communications device 212. Example mobile wireless communications devices 212 may include portable or personal media players (e.g., music or MP3 players, video players, etc.), remote controls (e.g., television or stereo remotes, etc.), portable gaming devices, portable or mobile telephones, smartphones, tablet computers, etc. In this embodiment, the mobile wireless communications device 212 is capable of storing access information for a plurality of payment accounts, and can select an appropriate payment account for payment to a merchant based upon movement of the mobile wireless communications device in a pattern.

The mobile wireless communications device 212 includes a processor 214 coupled to a memory 216. The memory 216 may include volatile and non-volatile portions, and is configured to store access information for a plurality of payment accounts. The payment accounts may comprise credit card accounts, bank accounts, gift card accounts, payment services (e.g., PayPal), or even rewards card accounts, for example. The access information is information that the transaction terminal 211 uses to effectuate the transfer of funds from the payment account to the merchant account, such as an account number, routing number, PIN, etc.

Also coupled to the processor 2 14 are an input device 218, a display 220, a transceiver 226, and a NFC device 236. A housing 213 carries the processor 214, the memory 216, the input device 218, the display 220, the transceiver 226, and the NFC device 236. The input device 218 may comprise a keyboard, a touch sensitive pad, a trackball, an optical trackpad, a thumbwheel, a button, or other suitable device, for example. It should be appreciated that in some applications, the display 220 may comprise a touch sensitive display, and may therefore serve as the input device 218. In addition, the transceiver 226 may comprise a cellular transceiver, and may be configured to perform both voice and data cellular communications. A device movement sensor 231 is also coupled to the processor 214.

NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The processor 214 is configured to recognize movement of the mobile wireless communications device 212 in a pattern of movement representing a "gesture" based upon the movement sensor 231. As an example, a "gesture" may be holding the mobile wireless communications device 212 such that it is perpendicular with the ground, rotating it such that it is parallel to the ground, and then shaking it twice. Indeed, a "gesture" may be any movement or pattern of movements that the mobile wireless communications device 212 is put through.

The processor 214, after recognizing the gesture, determines a given payment account of the plurality thereof that is associated with the gesture. The processor 214 then sends access information for the given payment account to the transaction terminal 211 via the NFC device 236. The transaction terminal 211 may then effectuate a transfer of funds from the given payment account to the merchant account.

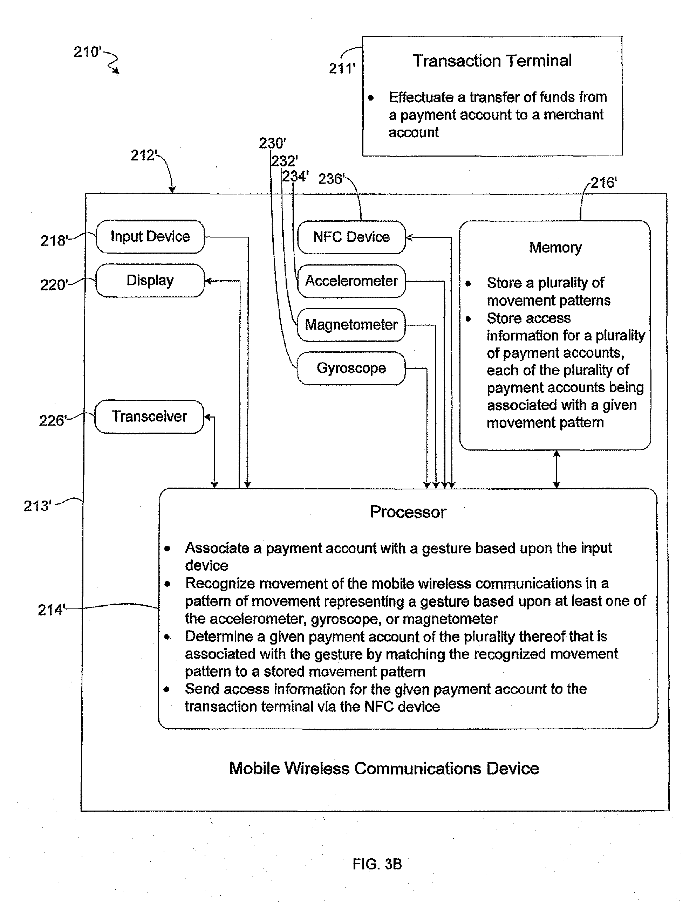

In another example embodiment shown in FIG. 3B, a gyroscope 230', a magnetometer 232', and an accelerometer 234' are coupled to the processor 214'. The gyroscope 230' can detect an orientation of the mobile wireless communications device 212', as well as changes to the orientation. That is, the gyroscope 230' can detect when the mobile wireless communications device 212' is turned or pointed in a given direction. In addition, the magnetometer 232' can determine the cardinal direction in which the mobile wireless communications device 212' is pointing (e.g. north, south, east, west). Further, the accelerometer 234' can detect acceleration of the mobile wireless communications device 212' in any direction, and is therefore also capable of determining a change in the orientation of the mobile wireless communications device.

The mobile wireless communications device 212' may not have each of the accelerometer 234', the magnetometer 232', and the gyroscope 230', etc., and in some embodiments the mobile wireless communications device 212' may have just one or two of such motion sensing devices.

The memory 216' stores a plurality of movement patterns, and each of the plurality of payment accounts is associated with a given movement pattern. The associations between the payment account and a gesture can be manually defined by the processor 214' based upon the input device 218'. For example, a list of the stored movement patterns and a list of the payment accounts may be displayed on the display 220', and the input device 218' may permit selection of a stored movement pattern and selection of a payment account. The processor 214' may then associate the selected stored movement pattern with the selected payment account.

In some applications, these associations may be set on an external device, such as a desktop computer, and may then be communicated to the mobile wireless communications device 212'. Furthermore, once set, these associations may be communicated to an external server, and the mobile wireless communications device 212' may download the associations upon boot-up or at another suitable time, for example.

In addition, new movement patterns may be recorded and stored in the memory 216' via cooperation between the processor 214' and any one of the accelerometer 234, the magnetometer 232, or the gyroscope 230. These movement patterns may then be associated with payment accounts, as described above.

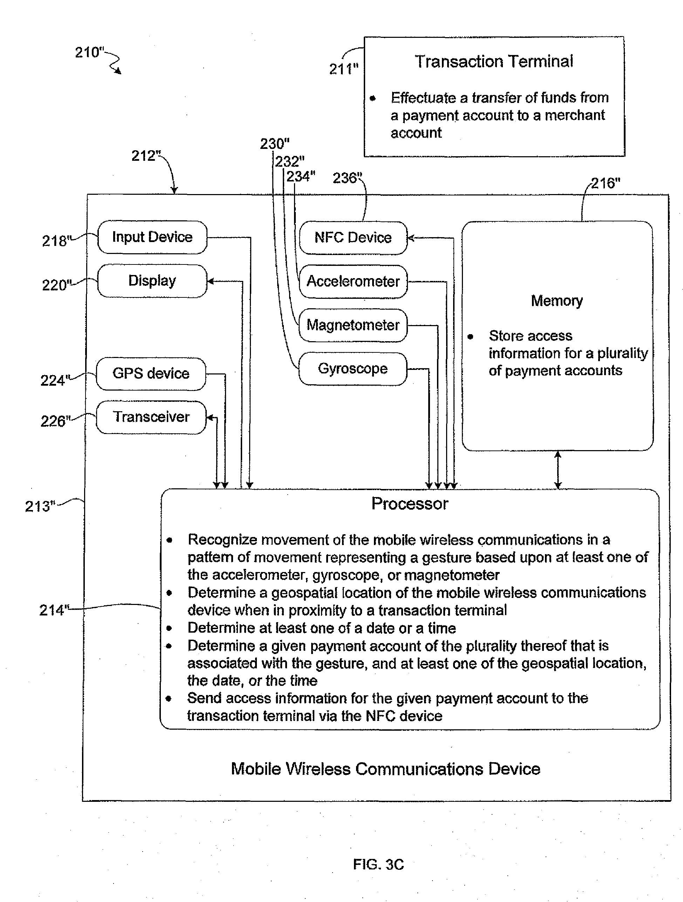

Another embodiment of the payment processing system 210" is now described with reference to FIG. 3C. Here, the mobile wireless communications device 212" includes a position determining device, such as a GPS device 224". The processor 214" determines a geospatial location of the mobile wireless communications device 210" when in proximity to the transaction terminal 211". The processor 214" also determines a current date or time.

In addition to determining the given payment account that is associated with the recognized gesture, the processor 214" determines a given payment account that is also associated with at least one of the geospatial location, the date, or the time. This may be helpful in situations where more than one payment account is associated with a given gesture. The geospatial location of the mobile wireless communications device 210", the date, or the time may then be useful in selecting between the payment accounts.

For example, the plurality of payment accounts may include a corporate VISA card, a personal VISA card, a corporate American Express card, and a personal American Express card. The stored movement patterns may include an VISA movement pattern and an American Express movement pattern. The geospatial location of the mobile wireless communications device 210", the date, or the time, may be used by the processor 214" to determine whether the corporate VISA card or the personal VISA card should be selected when the mobile wireless communications device is moved in the VISA movement pattern.

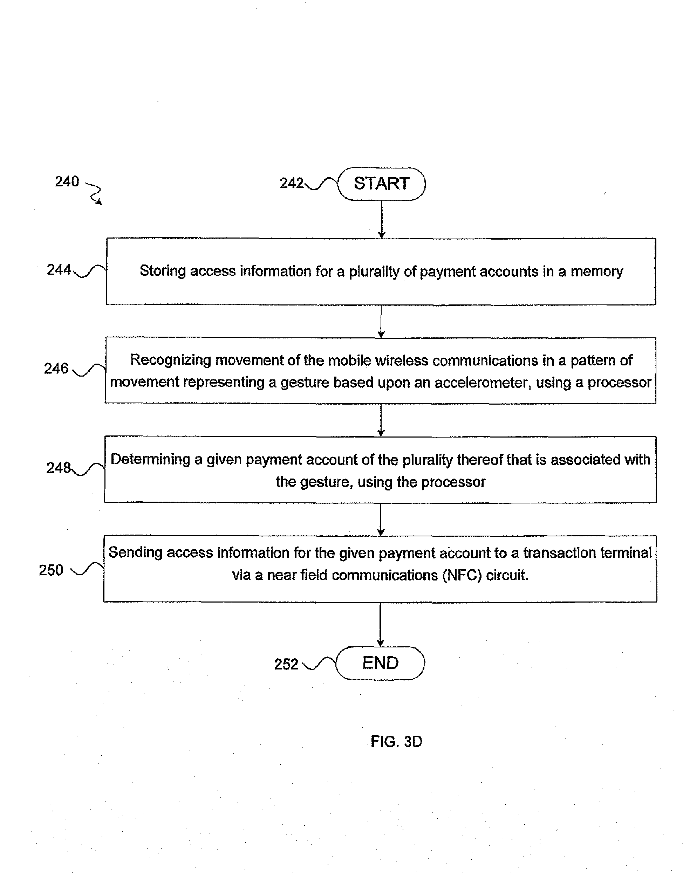

A method aspect of this embodiment is now described with reference to the flowchart 240 of FIG. 3D. After the start (Block 242), access information for a plurality of payments is stored in a memory (Block 244). Then, movement of the mobile wireless communications device in a pattern of movement representing a gesture is recognized based upon an accelerometer, using a processor (Block 246). Next, a given payment account of the plurality thereof that is associated with the gesture is determined, using the processor 214 (Block 248). Thereafter, access information for the given payment account is sent to the transaction terminal via a NFC device 236 (Block 250). Block 252 indicates the end of the method.

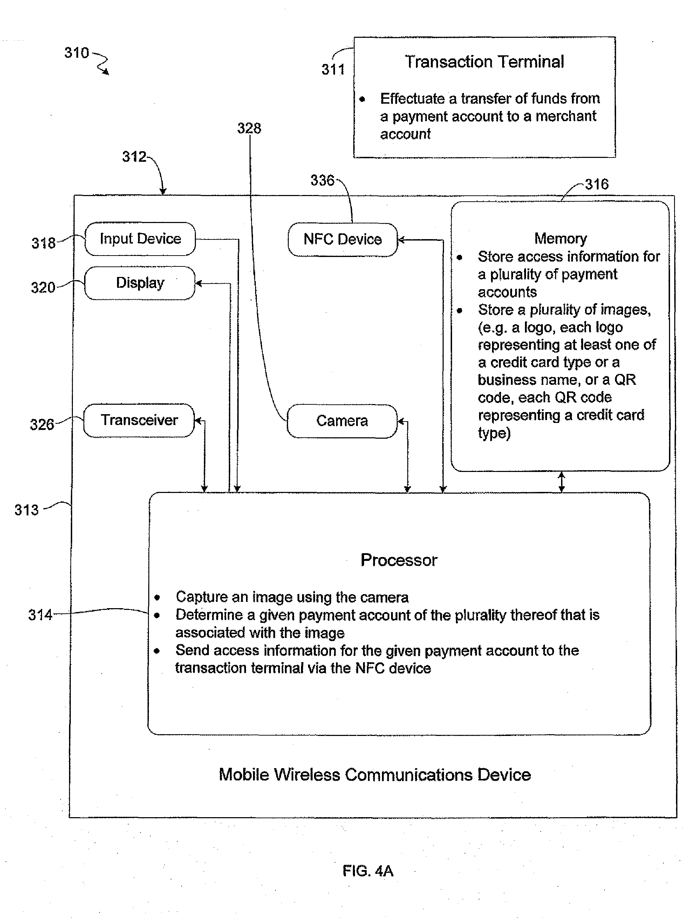

Another example embodiment of a payment processing system 310 is now discussed with reference to FIG. 4A. In this embodiment, the mobile wireless communications device 312 can take a picture of a logo, such as a credit card logo, and select the proper payment account based upon that picture. The transaction terminal 311, and most portions of the mobile wireless communications device 312 are similar to those described above and require no further discussion herein.

Here, the memory 316 stores access information for a plurality of payment accounts. The memory 316 also stores a plurality of images. By way of example, the images may comprise a logo, a QR code, etc. Each logo may represent a credit card type or a business name, while each QR code may represent a credit card type or a business identity, for example. Other types of images may also be used, such as bar codes, etc.

The processor 314 captures an image using the camera 328 (or other suitable optical sensor). The processor 314 then determines a given payment account of the plurality thereof that is associated with the image, such as by matching the image to a given one of the plurality of stored images. The reference images need not be stored by the memory 316 in all embodiments (e.g., they may be stored on an Internet server, etc., with which the processor 314 cooperates to determine the given payment account). Next, the processor 314 sends access information for the given payment account to the transaction terminal 311 via the NFC device 336. The transaction terminal 311 may then effectuate a transfer of funds from the given payment account to the merchant account.

As an example, a picture of an VISA Credit Card logo may be taken, and the processor 314 may determine that a corporate VISA Credit Card is associated with the image of the VISA Credit Card logo. The processor 314 may then send access information for the corporate VISA Credit Card to the transaction terminal 311.

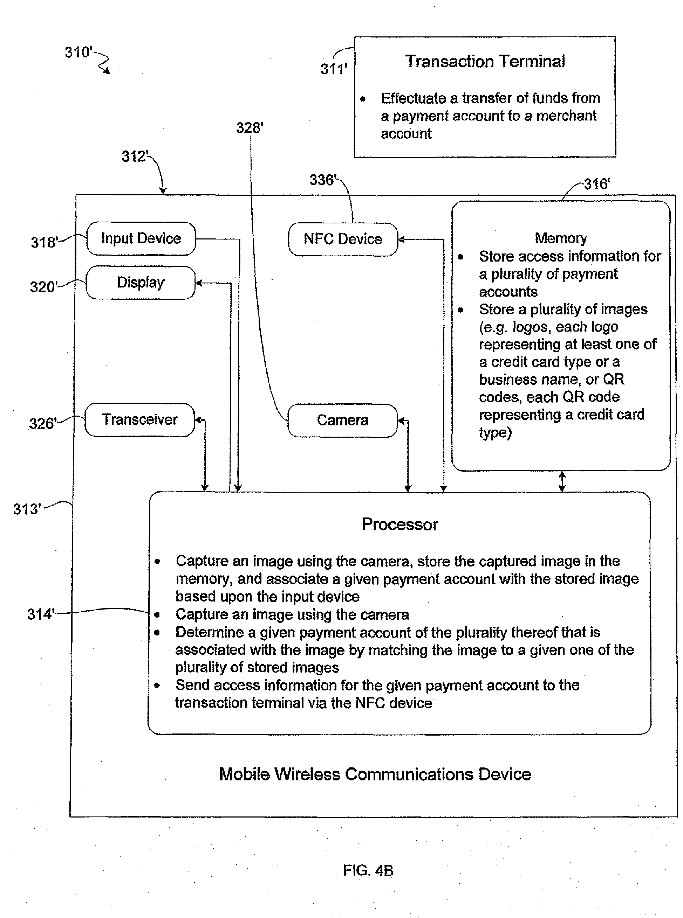

In another example embodiment shown in FIG. 4B, the associations between the payment account and an image can be manually defined by the processor 314' based upon the input device 318'. For example, the processor 314' may display the stored images on the display 320', and may also display a list of the payment accounts on the display 320'. The input device 318' may permit selection of a stored image and may permit selection of a payment account, and the processor 314' may associate the selected stored image with the stored payment account.

In some cases, a new image may be captured and stored in the memory 316', and then associated with a payment account. For example, an image of a logo may be captured by the camera 328', and the processor 314' may display on the display 320' an association setting option allowing the association of the image with a given payment account. In some applications, these associations may be set on an external device, such as a personal computer, and may then be communicated to the mobile wireless communications device 312. Furthermore, once set, these associations may be communicated to an external server, and the mobile wireless communications device 312 may download the associations upon boot-up or at another suitable time, for example.

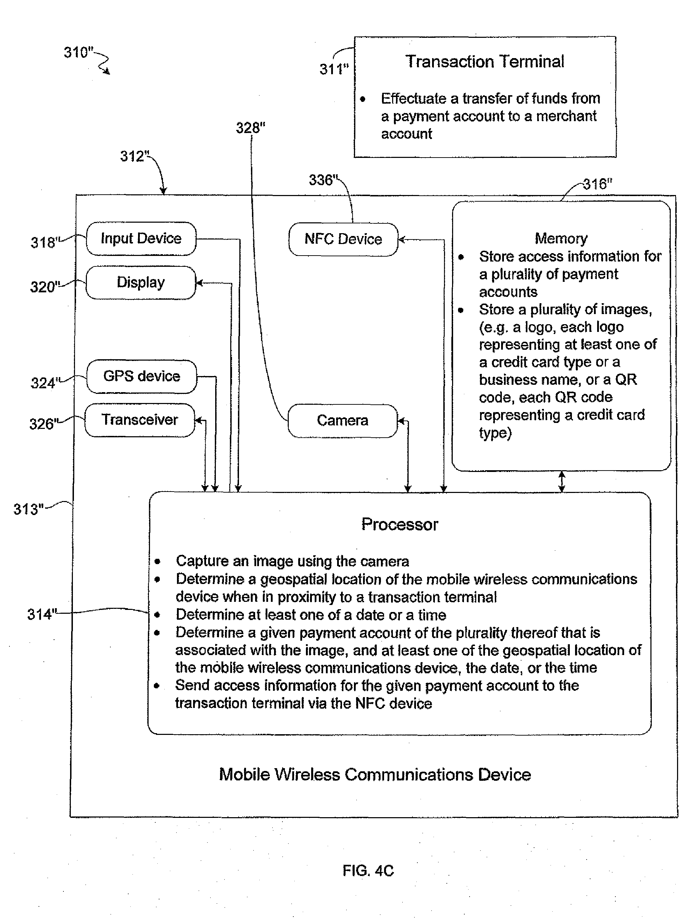

Another embodiment of the payment processing system 310" is now described with reference to FIG. 4C. Here, the mobile wireless communications device 312" includes a position determining device, such as a GPS device 324". The processor 314" determines a geospatial location of the mobile wireless communications device 310" when in proximity to the transaction terminal 311". The processor 314" also determines a current date or time.

In addition to determining the given payment account that is associated with an image, the processor 314" determines a given payment account that is also associated with at least one of the geospatial location, the date, or the time. This may be helpful in situations where more than one payment account is associated with a given image. The geospatial location of the mobile wireless communications device 310", the date, or the time may then be used in selecting between the payment accounts.

For example, the plurality of payment accounts may include a corporate VISA card, a personal VISA card, a corporate American Express card, and a personal American Express card. The stored image may include an VISA logo and a American Express logo. The position or location of the mobile wireless communications device 310", the date, or the time, may be used by the processor 314" to determine whether the corporate VISA card or the personal VISA card should be selected when the mobile wireless communications device captures an VISA logo. For instance, if an VISA logo is captured, and the geospatial location of the mobile wireless communications device 310" is a coffee shop, the personal VISA card may be selected, whereas if the geospatial location of the mobile wireless communications device is an office supply store, the corporate VISA card may be selected.

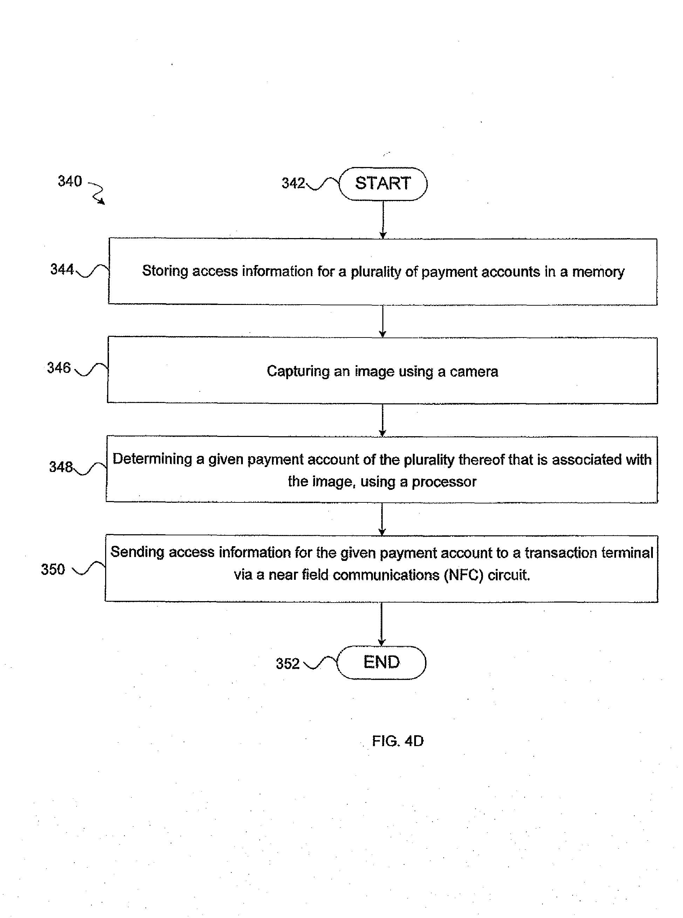

A method aspect of this embodiment is now described with reference to the flowchart 340 of FIG. 4D. After the start (Block 342), access information for a plurality of payment accounts is stored in a memory (Block 344). Next, an image is captured using a camera (Block 346). Thereafter, a given payment account of the plurality thereof that is associated with the image is determined, using a processor (Block 348). Access information for the given payment account is then sent to the transaction terminal via a NFC communications circuit (Block 350). Block 352 indicates the end of the method.

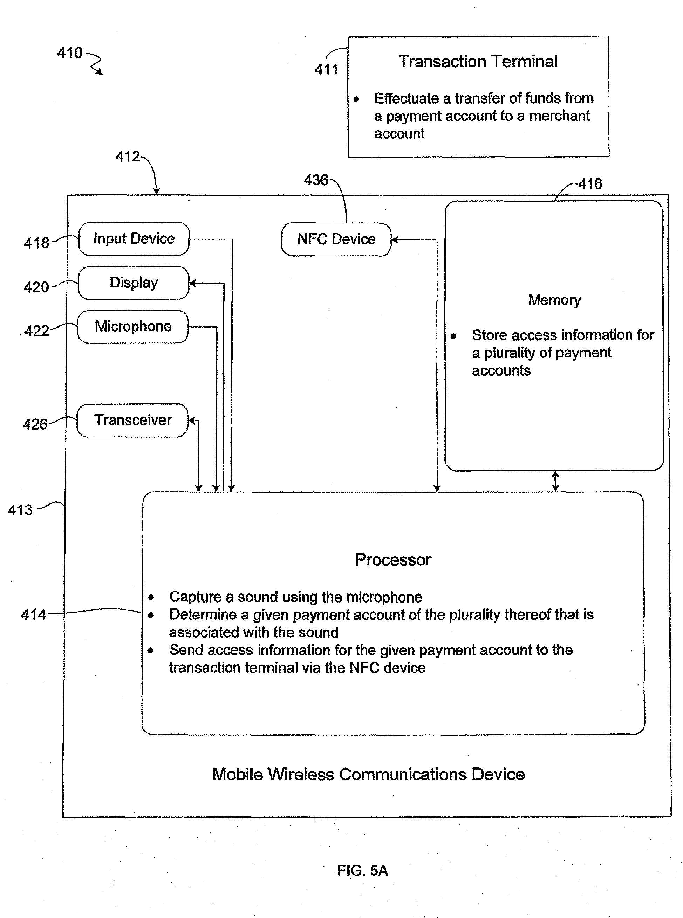

Another example embodiment of a payment processing system 410 is discussed now with reference to FIG. 5A. Here, the mobile wireless communications device 412 may select the proper payment account based upon a sound. The transaction terminal 411, and most portions of the mobile wireless communications device 412 are similar to those described above and require no further discussion herein.

In the example embodiment, the memory 416 stores access information for a plurality of payment accounts. The memory 416 also stores a plurality of sounds, and each sound is associated with one of the plurality of payment accounts.

The processor 414 is configured to record a sound using the microphone 422, and to determine a given payment account of the plurality thereof that is associated with the sound. This may be done by matching the sound to a given one of the plurality of stored sounds, using voice or sound recognition techniques, for example. The processor 414 then sends access information for the given payment account to the transaction terminal 411 via the NFC device 436.

By way of example, the processor 414 can record a sound via the microphone 422, and the sound may be "American Express Card." Based upon this sound, the processor 414 may select the American Express credit card and send account access information therefore to the transaction terminal 411. The transaction terminal 411 may then effectuate the transfer of funds from the payment account to the merchant account.

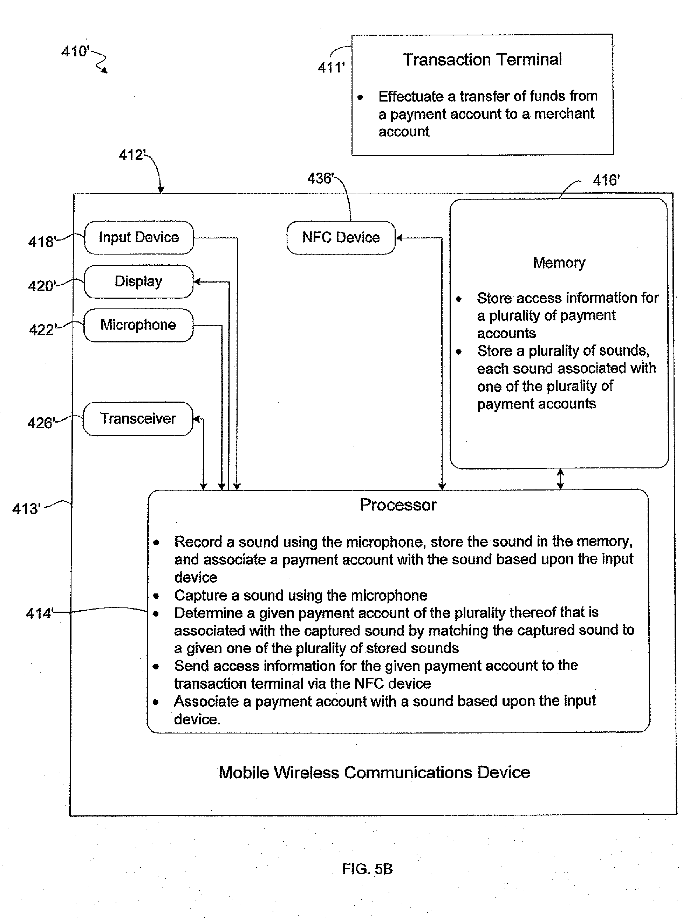

In a more detailed embodiment shown in FIG. 5B, the associations between the payment account and a sound can be manually defined by the processor 414' based upon the input device 418'. For example, the processor 414' may display the stored sounds on the display 420', and may also display a list of the payment accounts on the display. The input device 418' may permit selection of a stored sound and may permit selection of a payment account, and the processor 414' may associate the selected stored sound with the stored payment account.

In some cases, a new sound may be recorded and stored in the memory 416', and then associated with a payment account. For example, a sound may be captured by the microphone 422', and the processor 414' may display on the display 420' an association setting option allowing the association of the sound with a given payment account. In some applications, these associations may be set on an external device, such as a personal computer, and may then be communicated to the mobile wireless communications device 412'. Furthermore, once set, these associations may be communicated to an external server, and the mobile wireless communications device 412' may download the associations upon boot-up or at another suitable time, for example.

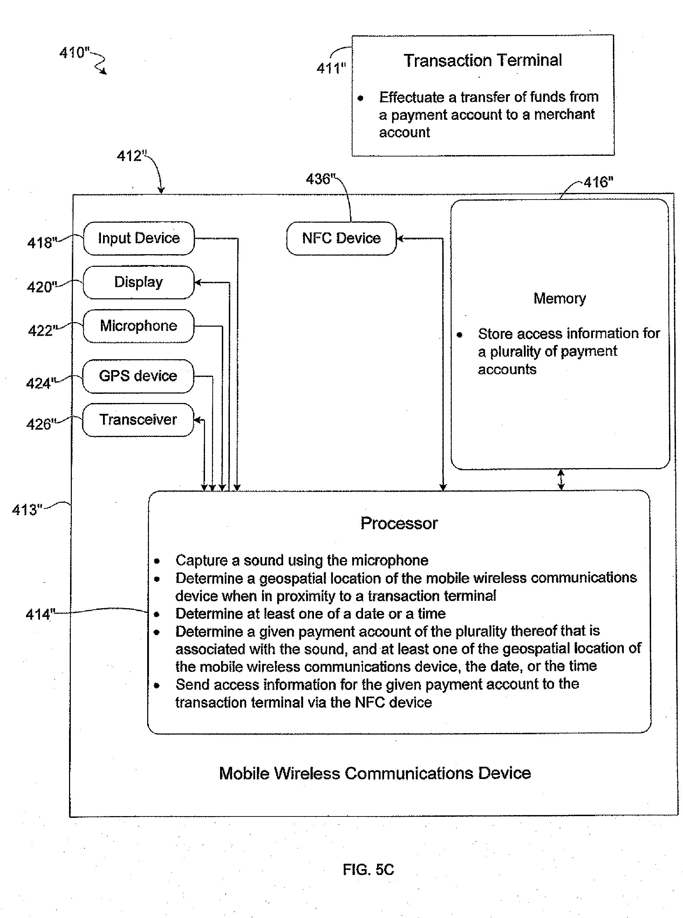

Another embodiment of the payment processing system 410" is now described with reference to FIG. 5C. Here, the mobile wireless communications device 412" includes a position determining device, such as a GPS device 424". The processor 414" determines a position or location of the mobile wireless communications device 410" when in proximity to the transaction terminal 411". The processor 414" also determines a current date or time.

In addition to determining the given payment account that is associated with a sound, the processor 414" determines a given payment account that is also associated with at least one of the geospatial location, the date, or the time. This may be helpful in situations where more than one payment account is associated with a given sound. The geospatial location of the mobile wireless communications device 410", the date, or the time may then be used in selecting between the payment accounts.

For example, the plurality of payment accounts may include a corporate VISA card, a personal VISA card, a corporate American Express card, and a personal American Express card. The stored sound may include an VISA sound and a American Express sound. The position or location of the mobile wireless communications device 410", the date, or the time, may be used by the processor 414" to determine whether the corporate VISA card or the personal VISA card should be selected when the mobile wireless communications device records an VISA sound. For instance, if an VISA sound is recorded, and the geospatial location of the mobile wireless communications device 910" is a coffee shop, the personal VISA card may be selected, whereas if the geospatial location of the mobile wireless communications device is an office supply store, the corporate VISA card may be selected.

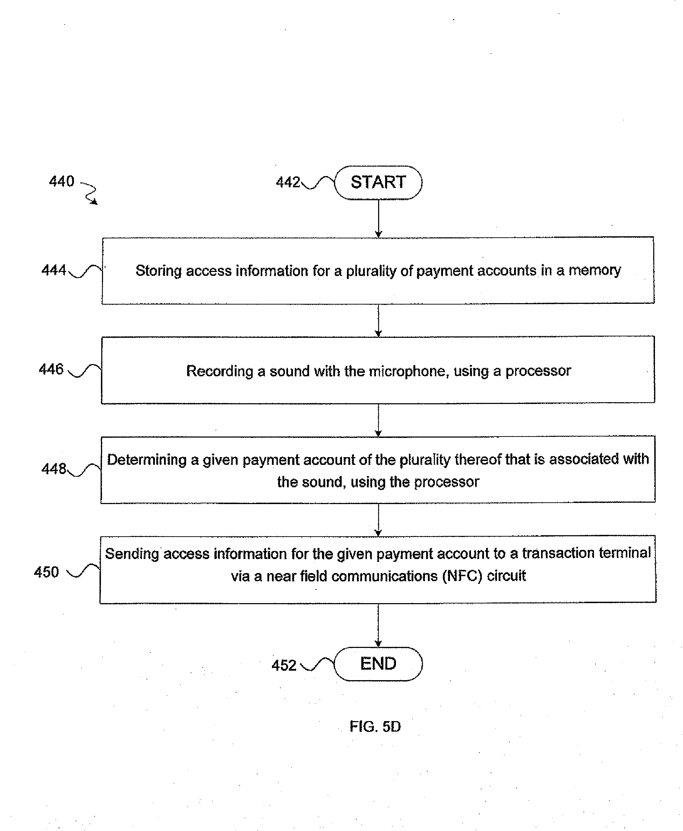

A method aspect of this embodiment is now described with respect to the flowchart 440 of FIG. 5D. After the start (Block 442), access information for a plurality of payment accounts is stored in the memory 416 (Block 444). Then, a sound is recorded with the microphone 422, using the processor 414 (Block 446). Thereafter, a given payment account of the plurality thereof that is associated with the sound is determined, using the processor 414 (Block 448). Access information for the given payment account is then sent to the transaction terminal 411 via the NFC device 436 (Block 450). Block 452 indicates the end of the method.

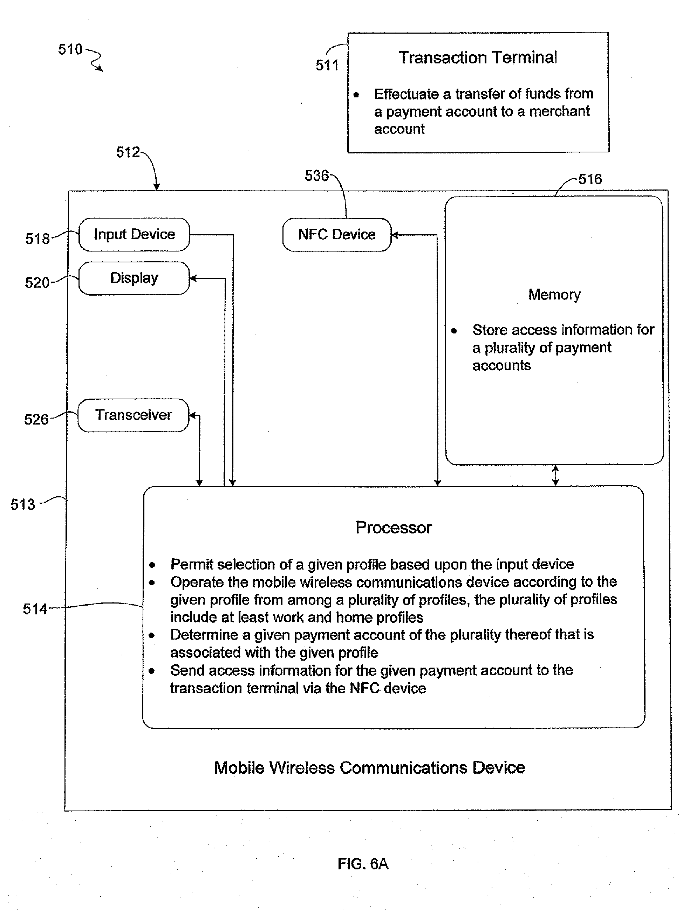

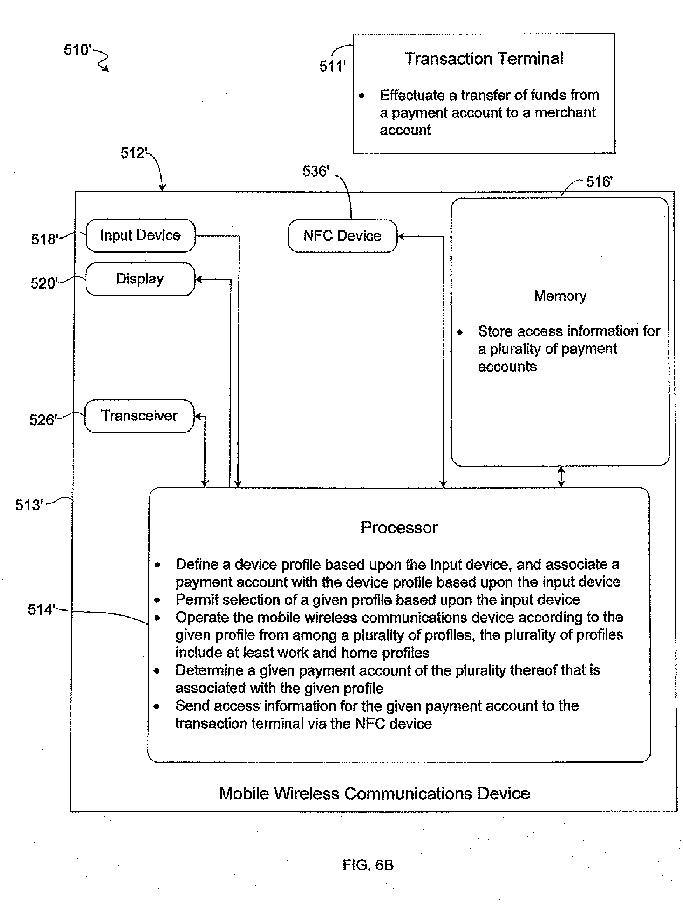

Another example embodiment of a payment processing system 510 is now described with reference to FIG. 6A. Here, the mobile wireless communications device 512 selects the proper payment account based upon a profile, e.g., a device profile. Example device profiles may include selectable alert profiles (e.g., loud, vibrate, silent, phone only, etc). Another example is a "home" profile, which may comprise a phone only profile. Still another example is a "work" profile, which may comprise a vibrate profile. In some implementations these may be considered as a "loud" notification profile vs. a "quiet" notification profile. Other device profiles may comprise a low power consumption profile (e.g., all wireless radios turned on) vs. a high power consumption profile (e.g., select or no wireless radios turned on).

The transaction terminal 511, and most portions of the mobile wireless communications device 512 are similar to those described above with respect to the mobile wireless communications device 12 shown in FIG. 1A, and require no further discussion herein.

The memory 516 is configured to store access information for a plurality of payment accounts. The processor 514 permits selection of a given profile from among a plurality of profiles, the plurality of profiles including at least work and home profiles, based upon the input device 518, and operates the mobile wireless communications device 512 based upon the given profile. By operating according to a profile, the mobile wireless communications device 512 will deliver notifications of new messages or calls as dictated by the profile, or will use a set of ring tones as dictated by the profile, for example.

The processor 514 determines a payment account of the plurality thereof that is associated with the given profile. Then, the processor 514 sends access information for the given payment account to the transaction terminal 511 via the NFC device 536. The transaction terminal 511 may then effectuate a transfer of funds from the given payment account to the merchant account.

By way of example, the processor 514 may be operating the mobile wireless communications device 512 based upon a "work" profile. Therefore, the processor 514 will select the VISA credit card, for example, associated with the work profile, and send account access information therefor to the transaction terminal 511.

In a more detailed embodiment shown in FIG. 5B, the associations between the payment account and a device profile can be manually defined by the processor 514' based upon the input device 518' . For example, the processor 514' may display the device profiles on the display 520', and may also display a list of the payment accounts on the display. The input device 518' may permit selection of a device profile and may permit selection of a payment account, and the processor 514' may associate the selected device profile with the stored payment account.

In some cases, a new device profile may be created and then associated with a payment account. For example, a new device profile may be created by the input device 518', and the processor 514' may display on the display 520' an association setting option allowing the association of the device profile with a given payment account. In some applications, these associations may be set on an external device, such as a personal computer, and may then be communicated to the mobile wireless communications device 512'. Furthermore, once set, these associations may be communicated to an external server, and the mobile wireless communications device 512' may download the associations upon boot-up or at another suitable time, for example.

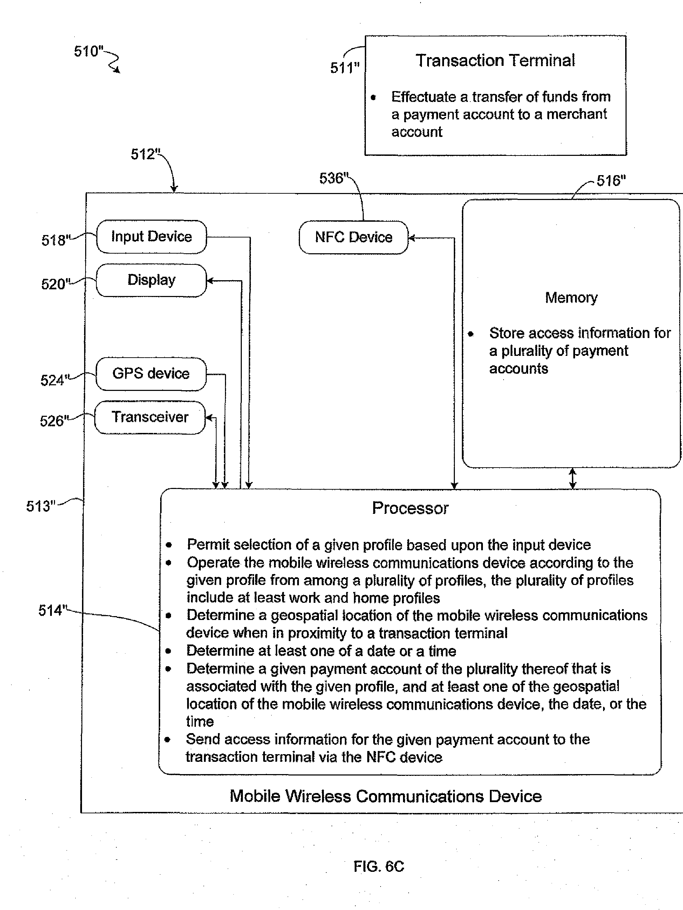

Another embodiment of the payment processing system 510" is now described with reference to FIG. 6C. Here, the mobile wireless communications device 512" includes a position determining device, such as a GPS device 524". The processor 514" determines a geospatial location of the mobile wireless communications device 510" when in proximity to the transaction terminal 511". The processor 514" also determines a current date or time.

In addition to determining the given payment account that is associated with a device profile, the processor 514" determines a given payment account that is also associated with at least one of the geospatial location, the date, or the time. This may be helpful in situations where more than one payment account is associated with a device profile. The geospatial location of the mobile wireless communications device 510", the date, or the time may then be used in selecting between the payment accounts.

For example, the plurality of payment accounts may include a corporate VISA card, a personal VISA card, a corporate American Express card, and a personal American Express card. A work device profile may be associated with the corporate ABC card and the corporate XYZ card. The geospatial location of the mobile wireless communications device 510", the date, or the time, may be used by the processor 514" to determine whether the corporate ABC card or the corporate XYZ card should be selected when the mobile wireless communications device is operating according to the work device profile. For instance, if the work device profile is selected, and the geospatial location of the mobile wireless communications device 510" is a coffee shop, the corporate ABC card may be selected, whereas if the geospatial location of the mobile wireless communications device is an office supply store, the corporate American Express card may be selected.

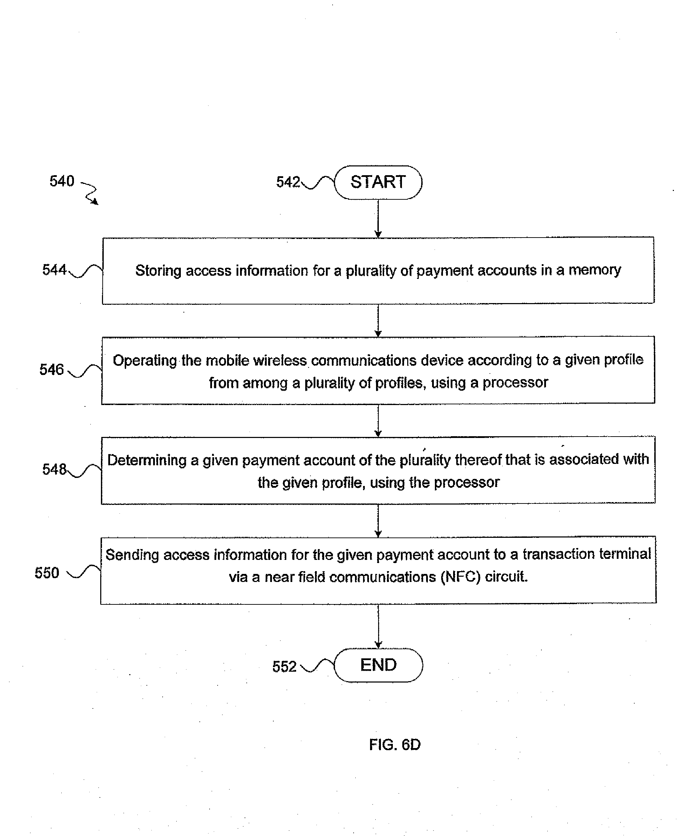

An example method aspect of this embodiment is now described with reference to the flowchart 540 of FIG. 6D. After the start (Block 542), access information for a plurality of payments accounts is stored in the memory 516 (Block 544). Then, the mobile wireless communications device 512 is operated according to a given profile from among a plurality of profiles, using the processor 514 (Block 546). Next, a given payment account of the plurality thereof that is associated with the given profile is determined, using the processor 514 (Block 548) .

Referring now to FIG. 1A, another payment processing system 10 is now described. Here, the memory 16 is configured to store a plurality of business identifiers and a plurality of geospatial locations associated with each business identifier. The business identifiers may comprise actual business names (e.g. XYZ Coffee, or ABC Pizza), or may comprise business types (e.g. coffee shops, pizza restaurants). By storing a plurality of geospatial locations associated with each business identifier, it is meant that, for example, multiple geospatial locations of XYZ Coffee franchises are stored, and/or that multiple geospatial locations of coffee shops (of any name) are stored. The purpose for this data will be explained in detail below.

Referring to FIG. 1A, the processor 14 may enter a payment mode based upon the input device 18, or based upon a NFC communication received from the transaction terminal 11 via the NFC device 36. In the payment mode, a payment account may be manually selected via the input device 18, or may be selected by the processor 14, as will be described in detail below.

The processor 14 is configured to determine a geospatial location of the mobile wireless communications device 12 based upon the GPS device 24, for example, although in some example embodiments a positioning determining device need not be included for determining position (e.g., this may be determined from a network using triangulation, etc.). Another approach is that the transaction terminal 11 may inform the processor 14 of its location, since the mobile wireless communications device 12 and the transaction terminal will be in approximately the same location when they communicate via NFC (i.e., they will be within several centimeters of one another). The processor 14 then determines a given payment account that is associated with the geospatial location, such as by determining a given business identifier that is associated with the geospatial location (these associations may have been previously stored in the memory 16). However, in some embodiments the associations may be stored elsewhere, such as with a third-party Internet service, and the processor may communicate with this service to determine the given account type, for example.

After making the determination regarding the payment account, the processor 14 sends the access information for the given payment account to the transaction terminal 11 via the NFC device 36. The processor 14 may display which payment account is being used on the display 20, and in some applications, may prompt for an approval to be entered via the input device 18 before it sends the access information for the payment account to the transaction terminal 11.

In some cases, the processor 14 may operate the mobile wireless communications device 12 in a display lock mode based upon the input device 18. In the display lock mode, the processor 14 may display a lock screen on the display 20. If the processor 14 is operating the mobile wireless communications device 12 in this display lock mode, it may still display which payment account is being used on the display lock screen via the display 20.

For example, the processor 14 may determine that the mobile wireless communications device 12 is in an XYZ Coffee franchise, and that a corporate credit card is associated with XYZ Coffee franchises. The processor 14 will then send access information for the corporate credit card account to the transaction terminal 11 in the XYZ Coffee franchise. That is, the processor 12 may thus send the access information for the corporate credit card regardless of which XYZ Coffee Franchise
(stored in the memory 16) the mobile wireless communications device 12 is at.

The processor 14 may also have determined that the mobile wireless communications device 12 is in a XYZ Coffee franchise, that XYZ Coffee is a coffee shop, and that the corporate credit card is associated with coffee shops. Additionally or alternatively, the processor 14 may have determined that the mobile wireless communications device 12 is at a particular XYZ Coffee franchise, and that the corporate credit card is associated with that particular XYZ Coffee location.

The associations between the payment account and the business identifiers can be manually defined by the processor 14 based upon the input device. For example, while at a business location, the processor 14 may display on the display 20 an association setting option allowing the association of that business location with a given payment account. Alternatively, a payment account may be manually selected via the input device 18, and then the association setting option may allow the association of that business location with the selected payment account. This association setting option may allow the associating of merely that single location, all locations with the same business name, or all locations with the same business type with the given payment account. Furthermore, the processor 14 may display a map on the display 20, and locations to associate with payment accounts may be selected from the map.

In some embodiments, these associations may be set on an external device, such as a personal computer, and may then be communicated to the mobile wireless communications device 12. Furthermore, once set, these associations may be communicated to an external server, and the mobile wireless communications device 12 may download the associations upon boot-up or at another suitable time, for example. It should be further appreciated that, in some applications, the processor 14 may allow manual selection of a given payment account to use, without setting an association between that given payment account and the business identifier.

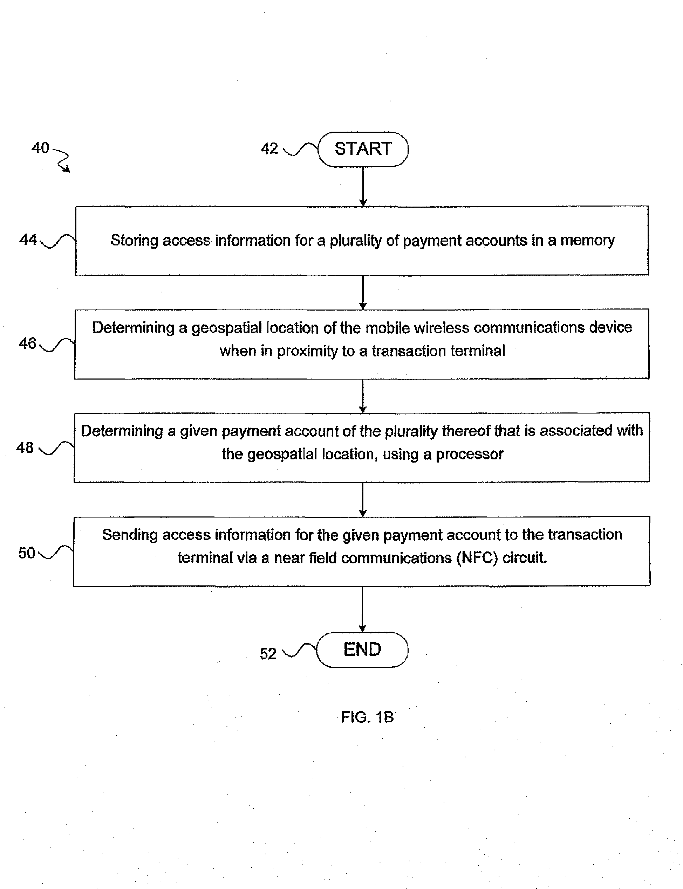

A related method aspect is now described with reference to the flowchart 40 of FIG. 1B. After the start (Block 42), access information for a plurality of payment accounts is stored in a memory (Block 44). Next, a geospatial location of the mobile wireless communications device is determined based upon a position determining device (Block 46). Thereafter, a given payment account of the plurality thereof that is associated with the geospatial location is determined using a processor (Block 48). Then, access information for the given payment account is sent to the transaction terminal via a near field communications (NFC) device (Block 50). Block 52 indicates the end of the method.

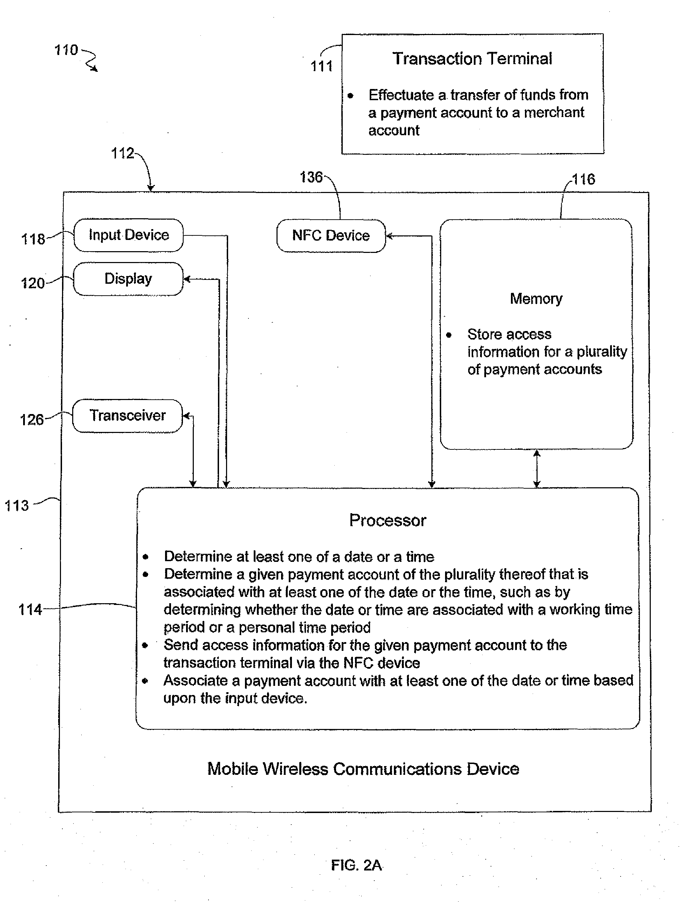

With reference to FIG. 2A, another example embodiment of a payment processing system 100 is now described. In this embodiment, the mobile wireless communications device 112 selects the payment account to send to the transaction terminal 111 based upon the date or time. The transaction terminal 111, and most portions of the mobile wireless communications device 112 (the input device 118, display 120, transceiver 126, and NFC device 136) are similar to those described above and require no further discussion herein.

Here, the memory 116 is configured to store access information for a plurality of payment accounts. The processor 114 is configured to determine a date or a time, and to then determine a given payment account of the plurality thereof that is associated with that date or time. The processor 114 may determine which payment account is associated with the date or time by determining whether that date or time is associated with working hours or personal hours, for example. Alternatively, individual blocks of time unrelated to working or personal hours may be associated with a payment account, such as weekend and weekday blocks of time, and the processor 114 may make the determination of which payment account to use based upon those associations.

As an example, the processor 114 may determine that the current day is Monday, and that the current time is 11:15 AM. Accordingly, the processor 114 may determine that the current time falls within working hours, and therefore that a corporate credit card should be selected to be sent to the transaction terminal 111 via the NFC device 136. As another example, the processor 114 may determine that the current date is Monday, and that the current time is 11:15 PM. Accordingly, the processor 114 may determine that the current time falls within personal hours, and that a personal credit card should therefore be selected to be sent to the transaction terminal 111 via the NFC device 136.

It should be appreciated that the associations between the payment account and the date or time may be manually defined by the processor 114 based upon the input device. For example, while at a business location, processor 114 may display on the display 120 an association setting option allowing the association of the current time with a given payment account. Furthermore, the processor 114 may display a calendar on the display 120, and times or dates associated with payment accounts may be selected from the calendar. Therefore, different dates and times may be associated with different payment accounts.

In some embodiments, these associations may be set on an external device, such as a personal computer, and may then be communicated to the mobile wireless communications device 112. Furthermore, once set, these associations may be communicated to an external server, and the mobile wireless communications device 112 may download the associations upon boot-up or at another suitable time, for example.

Further, the processor 114 may execute a calendar application, and different payment accounts may be manually associated with different calendar events. For example, a corporate credit card may be associated with calendar events marked as "Lunch Meeting, during the work week, with co-workers or business contacts, etc."

In addition, as discussed above, the processor 114 may allow manual selection of a given payment account without executing the association setting option. Instead, the processor 114 may generate a usage history based upon the manually selected payment accounts, and may then generate the associations between the payment account and the date or time based upon the usage history. For example, if a corporate credit card is manually selected at 2:30 PM every Monday, the processor 114 may associate that corporate credit card with that time and date. The processor 114 may either generate this association without requesting confirmation via the input device 118, or may request confirmation via the input device before generating the association.

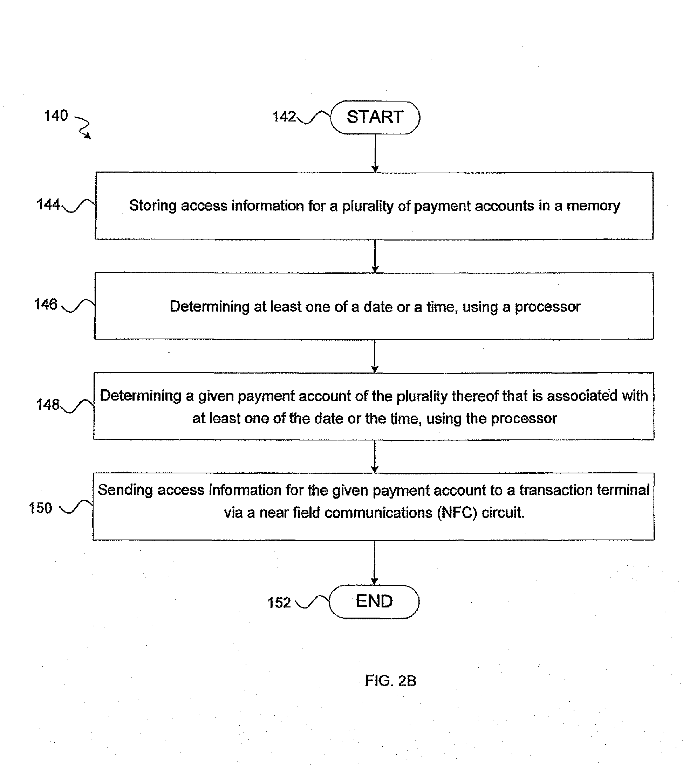

With reference to the flowchart 140 of FIG.2B, a method aspect of this embodiment is now described. After the start (Block 142), access information for a plurality of payment accounts are stored in a memory (Block 144). Next, at least one of a date or a time is determined using a processor (Block 146). Thereafter, a given payment account of the plurality thereof that is associated with at least one of the date or the time is determined using the processor (Block 148). Then, access information for the given payment account is sent to the transaction terminal via the NFC device 136. (Block 150). Block 152 indicates the end of the method.

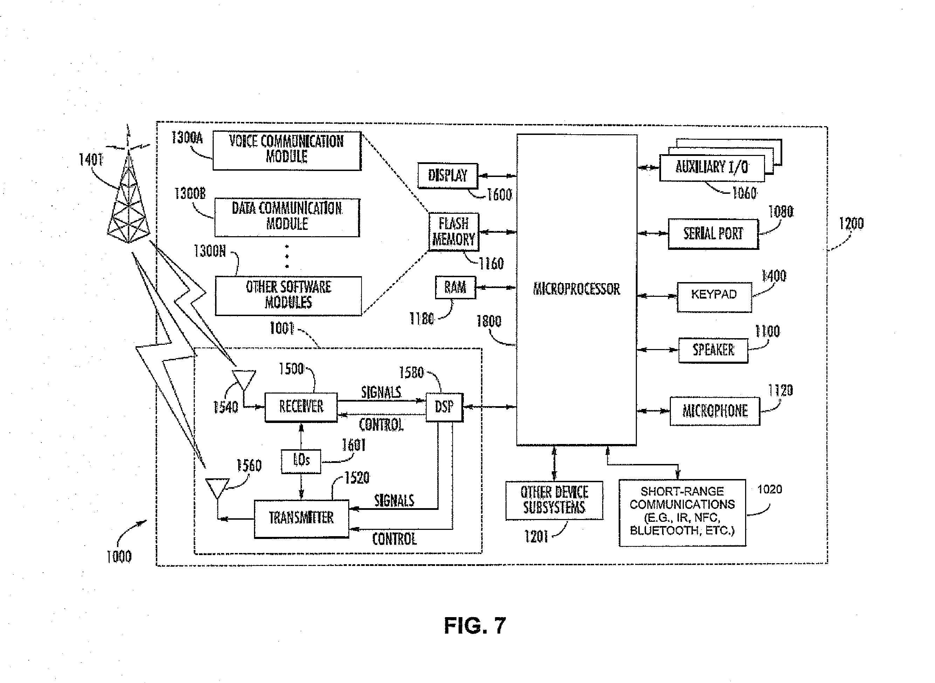

Example components of a mobile wireless communications device 1000 that may be used in accordance with the above-described embodiments are further described below with reference to FIG. 7. The device 1000 illustratively includes a housing 1200, a keyboard or keypad 1400 and an output device 1600. The output device shown is a display 1600, which may comprise a full graphic LCD. Other types of output devices may alternatively be utilized. A processing device 1800 is contained within the housing 1200 and is coupled between the keypad 1400 and the display 1600. The processing device 1800 controls the operation of the display 1600, as well as the overall operation of the mobile device 1000, in response to actuation of keys on the keypad 1400.

The housing 1200 may be elongated vertically, or may take on other sizes and shapes (including clamshell housing structures). The keypad may include a mode selection key, or other hardware or software for switching between text entry and telephony entry.

In addition to the processing device 1800, other parts of the mobile device 1000 are shown schematically in FIG. 7. These include a communications subsystem 1001; a short-range communications subsystem 1020; the keypad 1400 and the display 1600, along with other input/output devices 1060, 1080, 1100 and 1120; as well as memory devices 1160, 1180 and various other device subsystems 1201. The mobile device 1000 may comprise a two-way RF communications device having data and, optionally, voice communications capabilities. In addition, the mobile device 1000 may have the capability to communicate with other computer systems via the Internet.

Operating system software executed by the processing device 1800 is stored in a persistent store, such as the flash memory 1160, but may be stored in other types of memory devices, such as a read only memory (ROM) or similar storage element. In addition, system software, specific device applications, or parts thereof, may be temporarily loaded into a volatile store, such as the random access memory (RAM) 1180. Communications signals received by the mobile device may also be stored in the RAM 1180.

The processing device 1800, in addition to its operating system functions, enables execution of software applications 1300A―1300N on the device 1000. A predetermined set of applications that control basic device operations, such as data and voice communications 1300A and 1300B, may be installed on the device 1000 during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network 1401. The PIM data items may be seamlessly integrated, synchronized and updated via the wireless network 1401 with corresponding data items stored or associated with a host computer system.

Communication functions, including data and voice communications, are performed through the communications subsystem 1001, and possibly through the short-range communications subsystem. The communications subsystem 1001 includes a receiver 1500, a transmitter 1520, and one or more antennas 1540 and 1560. In addition, the communications subsystem 1001 also includes a processing module, such as a digital signal processor (DSP) 1580, and local oscillators (LOs) 1601. The specific design and implementation of the communications subsystem 1001 is dependent upon the communications network in which the mobile device 1000 is intended to operate. For example, a mobile device 1000 may include a communications subsystem 1001 designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device 1000. The mobile device 1000 may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device 1000 may send and receive communications signals over the communication network 1401. Signals received from the communications network 1401 by the antenna 1540 are routed to the receiver 1500, which provides for signal amplification, frequency down conversion, filtering, channel selection, etc., and may also provide analog to digital conversion. Analog-to-digital conversion of the received signal allows the DSP 1580 to perform more complex communications functions, such as demodulation and decoding. In a similar manner, signals to be transmitted to the network 1401 are processed (e.g. modulated and encoded) by the DSP 1580 and are then provided to the transmitter 1520 for digital to analog conversion, frequency up conversion, filtering, amplification and transmission to the communication network 1401 (or networks) via the antenna 1560.

In addition to processing communications signals, the DSP 1580 provides for control of the receiver 1500 and the transmitter 1520. For example, gains applied to communications signals in the receiver 1500 and transmitter 1520 may be adaptively controlled through automatic gain control algorithms implemented in the DSP 1580.

In a data communications mode, a received signal, such as a text message or web page download, is processed by the communications subsystem 1001 and is input to the processing device 1800. The received signal is then further processed by the processing device 1800 for an output to the display 1600, or alternatively to some other auxiliary I/O device 1060. A device may also be used to compose data items, such as e-mail messages, using the keypad 1400 and/or some other auxiliary I/O device 1060, such as a touchpad, a rocker switch, a thumb-wheel, or some other type of input device. The composed data items may then be transmitted over the communications network 1401 via the communications subsystem 1001.

In a voice communications mode, overall operation of the device is substantially similar to the data communications mode, except that received signals are output to a speaker 1100, and signals for transmission are generated by a microphone 1120. Alternative voice or audio I/O subsystems, such as a voice message recording subsystem, may also be implemented on the device 1000. In addition, the display 1600 may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A mobile wireless communications device comprising:
a near field communications (NFC) device;
a microphone;
a memory configured to store access information for each of a plurality of payment accounts; and
a processor cooperating with said NFC device, said microphone, and said memory, the processor being configured to
capture a sound using said microphone, determine a given payment account from among the plurality thereof based upon the sound, and
send the corresponding access information for the given payment account to a transaction terminal via said NFC device.

2. The mobile wireless communications device of Claim 1 wherein each payment account has a respective sound associated therewith, and wherein the captured sound comprises the sound associated with the given payment account.

3. The mobile wireless communications device of Claim 1 wherein said memory is configured to store a plurality of sounds, each sound being associated with a respective one of the plurality of payment accounts.

4. The mobile wireless communications device of Claim 3 wherein said processor is configured to determine the given payment account associated with the sound by matching the sound to one of the plurality of stored sounds.

5. The mobile wireless communications device of Claim 3 further comprising an input device; wherein said processor is further configured to capture a sound using said microphone and store the captured sound in said memory, and to associate a payment account with the stored sound based upon said input device.

6. The mobile wireless communications device of Claim 1 further comprising a position determining device; wherein said processor is configured to cooperate with said position determining device to determine a position of the mobile wireless communications device when in proximity to the transaction terminal; and wherein said processor is configured to also determine the given payment account based upon the geospatial location.

7. The mobile wireless communications device of Claim 1 wherein said processor is configured to determine at least one of a date or a time; and wherein said processor is configured to also determine the given payment account based upon at least one of the date or the time.

8. A method on a mobile wireless communications device, the method comprising:
storing access information for each of a plurality of payment accounts in a memory of the mobile wireless communications device;
capturing a sound using a microphone of the mobile wireless communications device;
determining a given payment account from among the plurality thereof that is associated with the captured sound, using a processor of the mobile wireless communications device; and
sending the corresponding access information for the given payment account to a transaction terminal via a near field communications (NFC) device of the mobile wireless communications device.

9. The method of Claim 8 wherein each payment account has a respective sound associated therewith, and wherein the captured sound comprises the sound for the given payment account.

10. The method of Claim 8 further comprising storing a plurality of sounds in a memory of the mobile wireless communications device, each sound being associated with a respective one of the plurality of payment accounts.

11. The method of Claim 10 wherein the given payment account that is associated with the captured sound is determined by matching the captured sound to one of the plurality of stored sounds, using the processor.

12. The method of Claim 10 further comprising capturing a sound using the microphone, storing the captured sound in the memory, and associating a payment account with the captured stored sound based upon an input device of the mobile wireless communications device, using the processor.

## Amended claims

### Amended claims in accordance with Rule 137(2) EPC.

**1.** A mobile wireless communications device (412) comprising:
a near field communications "NFC" device (436);
a microphone (422);
a memory (416) configured to store access information for each of a plurality of payment accounts; and
a processor (414) cooperating with said NFC device, said microphone, and said memory, the processor being configured to
capture a sound using said microphone,
determine a given payment account from among the plurality thereof based upon the sound, and
send the corresponding access information for the given payment account to a transaction terminal (411) via said NFC device.

**2.** The mobile wireless communications device (412) of Claim 1 wherein each payment account has a respective sound associated therewith, and wherein the captured sound comprises the sound associated with the given payment account.

**3.** The mobile wireless communications device (412) of Claim 1 wherein said memory (416) is configured to store a plurality of sounds, each sound being associated with a respective one of the plurality of payment accounts.

**4.** The mobile wireless communications device (412) of Claim 3 wherein said processor (414) is configured to determine the given payment account associated with the sound by matching the sound to one of the plurality of stored sounds.

**5.** The mobile wireless communications device (412) of Claim 3 further comprising an input device (418); wherein said processor (414) is further configured to capture a sound using said microphone (422) and store the captured sound in said memory (416), and to associate a payment account with the stored sound based upon said input device.

**6.** The mobile wireless communications device (412") of Claim 1 further comprising a position determining device (424"); wherein said processor (414") is configured to cooperate with said position determining device to determine a position of the mobile wireless communications device when in proximity to the transaction terminal (411"); and wherein said processor is configured to also determine the given payment account based upon the geospatial location.

**7.** The mobile wireless communications device (412) of Claim 1 wherein said processor (414) is configured to determine at least one of a date or a time; and wherein said processor is configured to also determine the given payment account based upon at least one of the date or the time.

**8.** A method on a mobile wireless communications device, the method comprising:
storing access information for each of a plurality of payment accounts in a memory of the mobile wireless communications device;
capturing a sound using a microphone of the mobile wireless communications device;
determining a given payment account from among the plurality thereof that is associated with the captured sound, using a processor of the mobile wireless communications device; and
sending the corresponding access information for the given payment account to a transaction terminal via a near field communications "NFC" device of the mobile wireless communications device.

**9.** The method of Claim 8 wherein each payment account has a respective sound associated therewith, and wherein the captured sound comprises the sound for the given payment account.

**10.** The method of Claim 8 further comprising storing a plurality of sounds in a memory of the mobile wireless communications device, each sound being associated with a respective one of the plurality of payment accounts.

**11.** The method of Claim 10 wherein the given payment account that is associated with the captured sound is determined by matching the captured sound to one of the plurality of stored sounds, using the processor.

**12.** The method of Claim 10 further comprising capturing a sound using the microphone, storing the captured sound in the memory, and associating a payment account with the captured stored sound based upon an input device of the mobile wireless communications device, using the processor.
